(19) Europäisches Patentamt
European Patent Office
Office européen des brevets

(11) Veröffentlichungsnummer: **0 010 219**
**B1**

(12) # EUROPÄISCHE PATENTSCHRIFT

(45) Veröffentlichungstag der Patentschrift: **25.11.81**

(51) Int. Cl.³: **C 09 B 41/00**, C 07 C 107/00

(21) Anmeldenummer: **79103745.0**

(22) Anmeldetag: **02.10.79**

(54) **Verfahren zur kontinuierlichen Herstellung von Azopigmenten.**

(30) Priorität: **13.10.78 DE 2844634**

(43) Veröffentlichungstag der Anmeldung: **30.04.80 Patentblatt 80/9**

(45) Bekanntmachung des Hinweises auf die Patenterteilung: **25.11.81 Patentblatt 81/47**

(84) Benannte Vertragsstaaten: **BE CH DE FR GB IT**

(56) Entgegenhaltungen:
**CH-A-396 945**
**DE-B-1 085 278**
**DE-C-1 644 117**
**US-A-2 478 767**

(73) Patentinhaber: **HOECHST AKTIENGESELLSCHAFT, Postfach 80 03 20, D-6230 Frankfurt/Main 80 (DE)**

(72) Erfinder: **Behringer, Hartmut, Dr., Rotdornweg 6, D-5042 Erftstadt (DE)**
Erfinder: **Karrenbauer, Kurt, Dr., Lange Heide 38, D-5042 Erftstadt (DE)**
Erfinder: **Rehberg, Heinrich, Dr., Volkerstrasse 3, D-5030 Hürth-Hermülheim (DE)**

EP 0 010 219 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zur kontinuierlichen Herstellung von Azopigmenten

Die Erfindung betrifft ein Verfahren zur kontinuierlichen Herstellung von Azopigmenten durch Umsetzung einer Kupplungskomponente mit der wäßrigen Lösung einer Diazokomponente bei Temperaturen von 10 bis 60°C und Verweilzeiten von 0,2 bis 4 Stunden in einer Reaktionszone, die bereits mit der herzustellenden Azopigmentsuspension gefüllt ist, ggf. in Gegenwart üblicher Zustände, welche dadurch gekennzeichnet ist, daß man eine wäßrige Suspension oder Lösung der Kupplungskomponente in weitgehend laminarer Strömung von unten nach oben durch die Reaktionszone, welche eine zylindrische Form hat und senkrecht angeordnet ist, hindurchleitet; daß man die wäßrige Lösung der Diazokomponente seitlich an 2—50, vorzugsweise 3—10, übereinanderliegenden Stellen der Reaktionszone zugibt, wobei man von unten nach oben abnehmende Mengen der Diazokomponente zudosiert und erst an der obersten Zugabestelle den stöchiometrischen Endpunkt der Kupplungsreaktion einstellt; und daß man einen für jede Umsetzung charakteristischen, an sich bekannten pH-Wert einstellt, indem man verdünnte Alkalilauge seitlich an 2—50, vorzugsweise 3—10, übereinanderliegenden Stellen der Reaktionszone zugibt, wobei die Zugabestellen für die Diazokomponente einerseits und für die Alkalilauge andererseits in der Höhe versetzt angeordnet sind.

Die in Wasser unlöslichen Azopigmente werden in großem Umfang zum Färben von Lacken, Kunststoffen sowie in der Druckfarbenindustrie verwendet.

Die DE-PS 1 085 278 und die DE-OS 1 644 117 beschreiben bereits Verfahren zur kontinuierlichen Herstellung von Azopigmenten, wobei die Kupplungskomponente in Alkalilauge gelöst und als Lösung mit der stets sauren Lösung der Diazokomponente (Diazoniumsalzlösung) umgesetzt wird.

Beim Verfahren der DE-OS 1 085 278 werden beide Lösungen einem Reaktionssystem zugeführt, das bereits gekuppelte Farbstoffsuspension enthält, die in großer Menge umgepumpt wird. Beim Verfahren der DE-OS 1 644 117 werden beide Reaktionskomponenten einer Mischdüse zugeführt und dort fein verwirbelt.

Bei beiden Verfahren ist es nachteilig, daß die gesamte Umsetzung unter Äquivalenzpunktbedingungen abläuft. Dies bedeutet, daß nur geringe Ungenauigkeiten bei der Dosierung der Reaktionskomponenten einen Überschuß an Diazoniumsalz im Reaktionsgemisch verursachen können, wodurch die Qualität der gebildeten Azopigmente negativ beeinflußt wird. Weiterhin ist es beim Verfahren der DE-OS 1 644 117 ungünstig, daß infolge der unmittelbaren Zusammenführung der alkalischen Lösung der Kupplungskomponente und der sauren Diazoniumsalzlösung der pH-Wert nur innerhalb ziemlich weiter Grenzen konstant gehalten werden kann. Es ist aber bekannt, daß der pH-Wert einen erheblichen Einfluß auf die Qualität der gebildeten Azopigmente hat. Beim Verfahren der DE-PS 1 085 278 ist es dagegen von Nachteil, das erhebliche Mengen an Farbstoffsuspension umgepumpt werden müssen.

Die Erfindung kann ferner bevorzugt und wahlweise dadurch gekennzeichnet sein, daß man

a) die Azopigmentsuspension aus der Reaktionszone in eine oder nacheinander in mehrere beheizbare Verweilzonen überführt und dort bei Temperaturen von 20 bis 100°C und einer Gesamtverweilzeit von 0,2 bis 5 Stunden rührt;
b) die üblichen Zusätze der Lösung oder Suspension der Kupplungskomponente und/oder der aus der Reaktionszone abfließenden Azopigmentsuspension zudosiert.

Unter den bekannten Zusatzstoffen sind Netz-, Dispergier- und Emulgiermittel zu verstehen, die die Eigenschaften des gebildeten Azopigments verändern.

Der Kupplungsvorgang zu Azopigmenten wird bevorzugt bei 15—40°C durchgeführt.

Das Verfahren der Erfindung kann beispielsweise in der im Fließschema dargestellten und im folgenden beschriebenen Vorrichtung durchgeführt werden.

Im Rührbehälter (1) befindet sich die Kupplungskomponente, die mit Wasser und ggf. in Gegenwart von Zusatzstoffen suspendiert ist. Man geht hier häufig so vor, daß man die Kupplungskomponente in Waser suspendiert, unter Zugabe von etwa 25%iger Natronlauge und Rühren löst und anschließend mit einer Säure wieder ausfällt. Auf diese Weise gewinnt man einen besonders feinteiligen Ausgangsstoff für die spätere Kupplung und stellt gleichzeitig den für die Kupplung bevorzugten pH-Wert ein.

Die Suspension wird mittels der Dosierpumpe (2) kontinuierlich von unten in den zylinderförmigen Kuppelreaktor (3) gepumpt. Seitlich an 2—50, hier 3, übereinanderliegenden Stellen des Reaktors (3) wird über Leitung (4) und Dosierpumpe (5) Diazoniumsalzlösung zugegeben, wobei der Durchfluß an den im Fließschema dargestellten drei Zugabstellen so eingestellt wird, daß im Reaktor an der unteren und mittleren Zugabestelle stets noch ein Überschuß an Kupplungskomponente vorhanden ist. Die Reaktionsgeschwindigkeit nimmt im Reaktor (3) von unten nach oben ab. Auch die Mengen der an den einzelnen Zugabestellen zudosierten Diazoniumsalzlösung werden von unten nach oben vermindert. Die an der obersten Zugabestelle zudosierte geringste Diazoniumsalzmenge wird so einreguliert, daß der stöchiometrische Endpunkt der Kupplungsreaktion (Äquivalenzpunkt) erreicht wird. Zur

Endpunktbestimmung bedient man sich bekannter Methoden wie der Tüpfelprobe oder der Potentialmessung, z. B gemäß DE-OS 1 085 278. Die an der obersten Zugabestelle zuzugebende geringste Diazoniumsalzmenge kann auch gemäß DE-PS 1 085 278 von dem gemessenen Potential automatisch gesteuert werden.

Um im Reaktor (3) definierte pH-Werte zu erhalten, wird aus dem Vorratsbehälter (6) mit Hilfe der Dosierpumpe (7) Alkalilauge, vorzugsweise Natronlauge, zugesetzt. Die Zugabe erfolgt wie beim Diazoniumsalz seitlich an 2—50, hier 3, übereinanderliegenden Stellen des Reaktors (3), wobei die Zugabestellen für die Diazoniumsalzlösung einerseits und für die Alkalilauge andererseits vorzugsweise einander gegenüberliegend, aber stets in der Höhe versetzt angeordnet sind. Die Alkalilaugemengen können vom pH-Wert automatisch gesteuert werden. Der einzustellende pH-Wert selbst ist nicht Gegenstand des Verfahrens gemäß der Erfindung. Je nach Art der eingesetzten Kupplungskomponente variiert der günstigste Bereich für den pH-Wert. Da die meisten Kupplungsreaktionen bekannt sind, sind auch die zugehörigen pH-Bereiche bekannt.

Der Kuppelreaktor (3) ist zu Heiz- oder Kühlzwecken mit einem Doppelmantel versehen. Außerdem ist er mit einem Rührer ausgerüstet, der so konstruiert ist, daß er eine gute Rührwirkung in der Ebene senkrecht zur Rührachse erzeugt, eine Rührwirkung in Richtung der Rührachse bzw. der Zylinderachse des Kuppelreaktors hingegen weitgehend fehlt. Hierdurch wird eine nahezu ungestörte Strömung der Reaktionsmischung von unten nach oben durch den Reaktor und somit eine definierte Verweilzeit erreicht.

Dem Kuppelreaktor können noch weitere Behälter, z. B. (8) und (9) nachgeschaltet werden. Sie können mit einem Rührer derselben Konstruktion wie im Kuppelreaktor (3) und/oder mit einem Doppelmantel zur Heizung oder Kühlung ausgerüstet sein. In ihnen kann das Pigment nachgerührt und erhitzt werden.

Der Kuppelreaktor und die nachgeschalteten Behälter sind mit Flanschen versehen, so daß sie mit Hilfe von Zwischenstücken verlängert und verkürzt werden können. Somit kann die Verweilzeit im Kuppelreaktor verändert und den bei verschiedenen Kupplungen unterschiedlichen Reaktionsgeschwindigkeiten angepaßt werden. Bei den nachgeschalteten Behältern können die Rühr- und Heizzeiten variiert werden.

Über die Leitungen (10) und/oder (11) können der Azopigmentsuspension Zusatzstoffe zugeführt werden.

## Beispiel 1

Herstellung von α-(2′-Nitro-4′-methyl-phenylazo)-acetessigsäurephenylamid der Formel

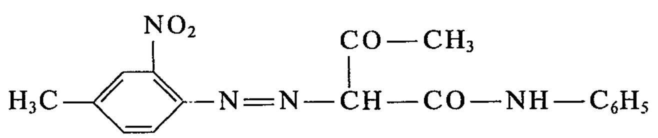

In einem 5-l-Becherglas werden 1,350 Liter Wasser, 8 ml einer 8gewichtsprozentigen wäßrigen Lösung von dibutyliertem Naphthalinsulfonat (Leonil DB(R); R = eingetragenes Warenzeichen der Firme Hoechst Aktiengesellschaft, Frankfurt/M.) als Zusatzstoff und 354 g (2 Mol) N-Acetoacetylanilin der Formel $CH_3COCH_2CONH\text{-}C_6H_5$ zu einer Suspension verrührt. Durch Zugabe von 76 ml 25%iger Natronlauge wird das N-Acetoacetylanilin unter Rühren gelöst und anschließend mit 36 ml Eisessig wieder ausgefällt. Der pH-Wert wird auf 6 eingestellt und die Suspension in den Rührbehälter (1) eingefüllt. Von dort wird die Suspension innerhalb von 1 Stunde kontinuierlich in den von einem vorausgegangenen Versuch mit der Suspension des herzustellenden Azopigments gefüllten Kuppelreaktor (3) gepumpt. Die Diazoniumsalzlösung aus diazotiertem 3-Nitro-4-aminotoluol wird über Leitung (4) an 3 Stellen zugegeben. Damit an der unteren und mittleren Zugabestelle kein, an der oberen Zugabestelle ein geringer Diazoniumsalzüberschuß besteht, werden an der unteren Zugabestelle 60%, an der mittleren 30% und an der oberen 10% der gesamten Diazoniumsalzmenge (2 Mol) zudosiert.

Die Temperatur im Kuppelreaktor beträgt 38°C. Der pH-Wert wird durch Zugabe von 5%iger Natronlauge aus dem Vorratsbehälter (6) an den 3 in der Zeichnung bezeichneten Stellen auf 4,2 über den gesamten Kuppelreaktor (3) gehalten.

Das gebildete Azopigment (2 Mol) fließt ohne Nachschaltung weiterer Behälter als wäßrige Suspension oben aus dem Kuppelreaktor kontinuierlich ab. Nach der üblichen Aufarbeitung und Trocknung wurde bei der coloristischen Ausprüfung mehrerer Parallelansätze die volle Reproduzierbarkeit der coloristischen Eigenschaften des Azopigments festgestellt.

## Beispiel 2

Herstellung von α-(2'-Nitro-4'-chlor-phenylazo)-acetessigsäure-2-Chlor-phenylamid der Formel

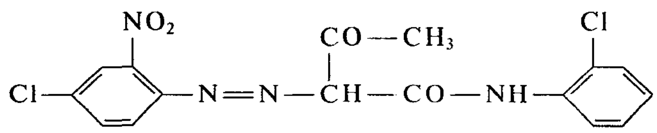

In einem 5-l-Becherglas werden 211 g (1 Mol) N-Acetoecetyl-o-chloranilin und 1,550 Liter Wasser zu einer Suspension verrührt. Durch Zugabe von 43 ml 25%iger Natronlauge wird das N-Acetoacetyl-o-chloranilin unter Rühren gelöst und anschließend mit 20 ml Eisessig wieder ausgefällt. Der pH-Wert wird auf 5,5 eingestellt und die Suspension in den Rührbehälter (1) eingefüllt. Von dort wird die Suspension innerhalb von 30 min kontinuierlich in den von einem vorausgegangenen Versuch mit der Suspension des herzustellenden Azopigments gefüllten Kuppelreaktor (3) gepumpt. Die Diazoniumsalzlösung aus diazotiertem 4-Chlor-2-nitranilin (1 Mol) wird über Leitung (4) an 3 Stellen zugegeben und im übrigen wie in Beispiel 1 gearbeitet.

Die Temperatur im Kuppelreaktor beträgt 28° C, der pH-Wert wird mit Natronlauge auf 4,5 gehalten. Man erhält 1 Mol Azopigment mit den gewünschten coloristischen Eigenschaften, deren volle Reproduzierbarkeit bei der coloristischen Ausprüfung mehrerer Parallelansätze festgestellt wurde.

## Beispiel 3

Herstellung von 3,3'-Dichlor-4,4'-bis[azo-α-(1''-acetoacetylamino)-4''-chlor-2'',5''-dimethoxybenzol]-diphenyl der Formel

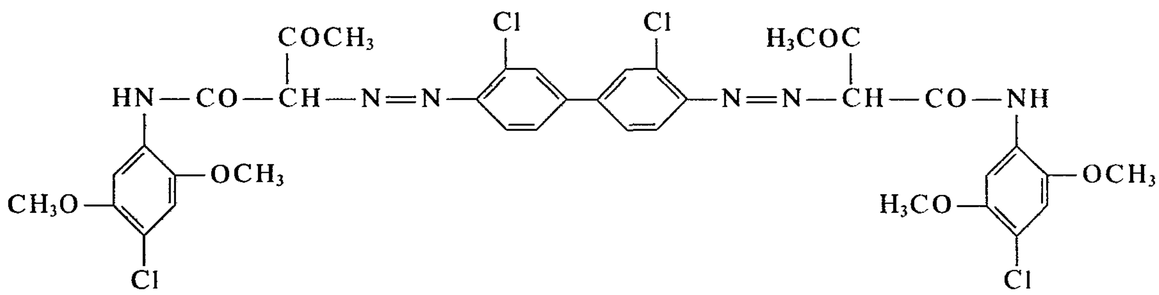

In einem 5-l-Becherglas werden 420 g (2,2 Mol) 1-Acetoacetylamino-4-chlor-2,5-dimethoxybenzol in einer Mischung aus 1,600 Liter Wasser und 219 ml 25%iger Natronlauge gelöst. Die Lösung wird sodann innerhalb von 30 min zu einer Mischung aus 275 ml Wasser, 250 g Eis und 115 ml Eisessig gegeben. Die erhaltene Suspension wird in den Rührbehälter (1) eingefüllt und von dort innerhalb von 1 Stunde kontinuierlich in den von einem vorgegangenen Versuch mit der Suspension des herzustellenden Azopigments gefüllten Kuppelreaktor (3) gepumpt. Die Diazoniumsalzlösung aus diazotiertem 3,3'-Dichlorbenzidin der Formel

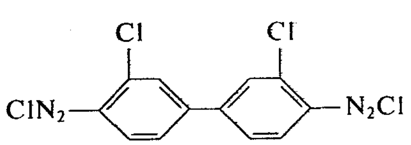 (2,2 Mol)

wird über Leitung (4) an 3 Stellen zugegeben, der pH-Wert im Kuppelreaktor (3) mit Natronlauge auf 4,5 gehalten. Die Temperatur wird im Kuppelreaktor auf 30°C gehalten. Im übrigen verläuft der Versuch wie in Beispiel 1 beschrieben.

Die gebildete Azopigment-Suspension wird im Behälter (8) durch Heizung über den Doppelmantel auf 50° C, im Behälter (9) auf 80° C aufgeheizt. Über Leitung (10) werden 300 ml/h einer wäßrigen Harzseifenlösung als Zusatz eindosiert. Man erhält 2,2 Mol Azopigment mit den gewünschten coloristischen Eigenschaften, deren volle Reproduzierbarkeit bei der coloristischen Ausprüfung mehrerer Parallelansätze festgestellt wurde.

Beispiel 4

Herstellung von 1-(2'-Nitro-4'-methyl-phenylazo)-2-hydroxynaphthalin der Formel

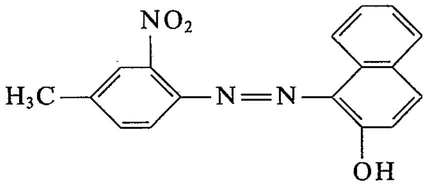

144 g β-Naphthol (1 Mol) werden in 750 ml Wasser und 140 ml 25%iger Natronlauge gelöst. Die Lösung wird sodann innerhalb von 10 Minuten zu einer Mischung aus 1,0 Liter Wasser, 105 ml 30%iger Salzsäure, 15 ml 80%iger Phosphorsäure und 450 g Eis gegeben. Die erhaltene Suspension wird in den Rührbehälter (1) eingefüllt und von dort innerhalb von 1 Stunde kontinuierlich in den von einem vorausgegangenen Versuch mit der Suspension des herzustellenden Azopigments gefüllten Kuppelreaktor (3) gepumpt. Die Diazoniumsalzlösung aus diazotiertem 3-Nitro-4-aminotoluol (1 Mol) wird über Leitung (4) an 3 Stellen zugegeben, der pH-Wert im Kuppelreaktor (3) mit Natronlauge auf etwa 7 gehalten. Die Temperatur im Kuppelreaktor beträgt 28°C. Im übrigen verläuft der Versuch wie in Beispiel 1 beschrieben.

Das gebildete Azopigment (1 Mol) fließt ohne Nachschaltung weiterer Behälter als wäßrige Suspension oben aus dem Kuppelreaktor kontinuierlich ab. Nach der üblichen Aufarbeitung und Trocknung wurde bei der coloristischen Ausprüfung mehrerer Parallelansätze die volle Reproduzierbarkeit der coloristischen Eigenschaften des Azopigments festgestellt.

**Patentansprüche**

1. Verfahren zur kontinuierlichen Herstellung von Azopigmenten durch Umsetzung einer Kupplungskomponente mit der wäßrigen Lösung einer Diazokomponente bei Temperaturen von 10–60°C und Verweilzeiten von 0,2 bis 4 Stunden in einer Reaktionszone, die bereits mit der herzustellenden Azopigmentsuspension gefüllt ist, ggf. in Gegenwart üblicher Zusätze, dadurch gekennzeichnet, daß man eine wäßrige Suspension oder Lösung der Kupplungskomponente in weitgehend laminarer Strömung von unten nach oben durch die Reaktionszone, welche eine zylindrische Form hat und senkrecht angeordnet ist, hindurchleitet; daß man die wäßrige Lösung der Diazokomponente seitlich an 2–50, vorzugsweise 3–10, übereinanderliegenden Stellen der Reaktionszone zugibt, wobei man von unten nach oben abnehmende Mengen der Diazokomponente zudosiert und erst an der obersten Zugabestelle den stöchiometrischen Endpunkt der Kupplungsreaktion einstellt; und daß man einen für jede Umsetzung charakteristischen, an sich bekannten pH-Wert einstellt, indem man verdünnte Alkalilauge seitlich an 2–50, vorzugsweise 3–10, übereinanderliegenden Stellen der Reaktionszone zugibt, wobei die Zugabestellen für die Diazokomponente einerseits und für die Alkalilauge andererseits in der Höhe versetzt angeordnet sind.

2. Verfahren nach Anspruch 1, dadurch gekennzeichnet, daß man die Azopigmentsuspension aus der Reaktionszone in eine oder nacheinander in mehrere beheizbare Verweilzonen überführt und dort bei Temperaturen von 20–100°C und einer Gesamtverweilzeit von 0,2 bis 5 Stunden rührt.

3. Verfahren nach Anspruch 1 oder 2, dadurch gekennzeichnet, daß man die üblichen Zusätze der Lösung oder Suspension der Kupplungskomponente und/oder der aus der Reaktionszone abfließenden Azopigmentsuspension zudosiert.

**Claims**

1. Process for the continuous manufacture of azo pigments by reacting a coupling component, optionally in the presence of customary addends, with an aqueous solution of a diazo component at temperatures of 10 to 60°C and over periods of 0.2 to 4 hours, inside a reaction zone filled previously with the suspension of the azo pigment to be made, which comprises: passing an aqueous suspension or solution of the coupling components in substantially laminar flow upwardly through a cylindrical reaction zone arranged in upright position; introducing the aqueous solution of the diazo component through 2 to 50, preferably 3 to 10 superposed lateral feed points of the reaction zone, the diazo component being admitted in quantities decreasing from below to above and the stoichiometric end point of the coupling reaction being established at the uppermost feed point only; and establishing the pH-value typical of each reaction and known as such by introducing dilute alkali liquor through 2 to 50, preferably 3 to 10 superposed lateral feed points of the reaction zone, the diazo component and alkali liquor feed points, respectively being arranged at different levels with respect to each other.

2. Process as claimed in claim 1, wherein the azo pigment suspension is delivered from the reaction zone to one or more heatable serially arranged sojourn zones, and stirred therein at temperatures of 20 to 100° C over a total period of 0.2 to 5 hours.

3. Process as claimed in claim 1 or 2, wherein the customary addends are metered into the solution or suspension of the coupling component and/or the azo pigment suspension coming from the reaction zone.

**Revendications**

1. Procédé de préparation en continu de pigments azoïques par réaction, éventuellement en présence d'adjuvants habituels, d'un composant de copulation avec une solution aqueuse d'un diaszoïque à des températures de 10 à 60° C et pendant 0,2 à 4 h dans une zone de réaction remplie au préalable de la suspension du pigment azoïque à préparer, qui est caractérisé en ce que l'on fait passer une suspension ou solution aqueuse du composant de copulation en écoulement nettement laminaire de bas en haut à travers la zone de réaction de forme cylindrique en position verticale, en ce que l'on introduit la solution aqueuse du diazoïque dans la zone de réaction par 2 à 50 points latéraux de la zone de réaction, de préférence 3 à 10, disposés les uns au-dessus des autres, le diazoïque étant introduit en quantités dosées décroissantes de bas en haut et le point final stoechiométrique de la réaction de copulation n'étant ajusté qu'au point d'introduction situé le plus haut, et en ce que l'on établit la valeur de pH caractéristique de chaque réaction par introduction d'une lessive alcaline diluée par 2 à 50 points d'introduction, de préférence 3 à 10, disposés les uns au-dessus des autres, les points d'introduction du diazoique et de la lessive alcaline, respectivement, étant décalés vers le haut, les uns par rapport aux autres.

2. Procédé selon la révendication 1, caractérisé en ce que l'on introduit la suspension de pigment anzoïque sortant de la zone de réaction dans une ou plusieurs zones de passage chauffable disposées l'une à la suite de l'autre on l'agite à des températures de 20 à 100° C pendant une durée totale de 0,2 à 5 h.

3. Procédé selon la revendication 1 ou 2, caractérisé en ce que l'on ajoute des quantités dosées d'adjuvants habituels à la solution ou suspension du composant de copulation et/ou à la suspension du pigment azoïque sortant de la zone de réaction.

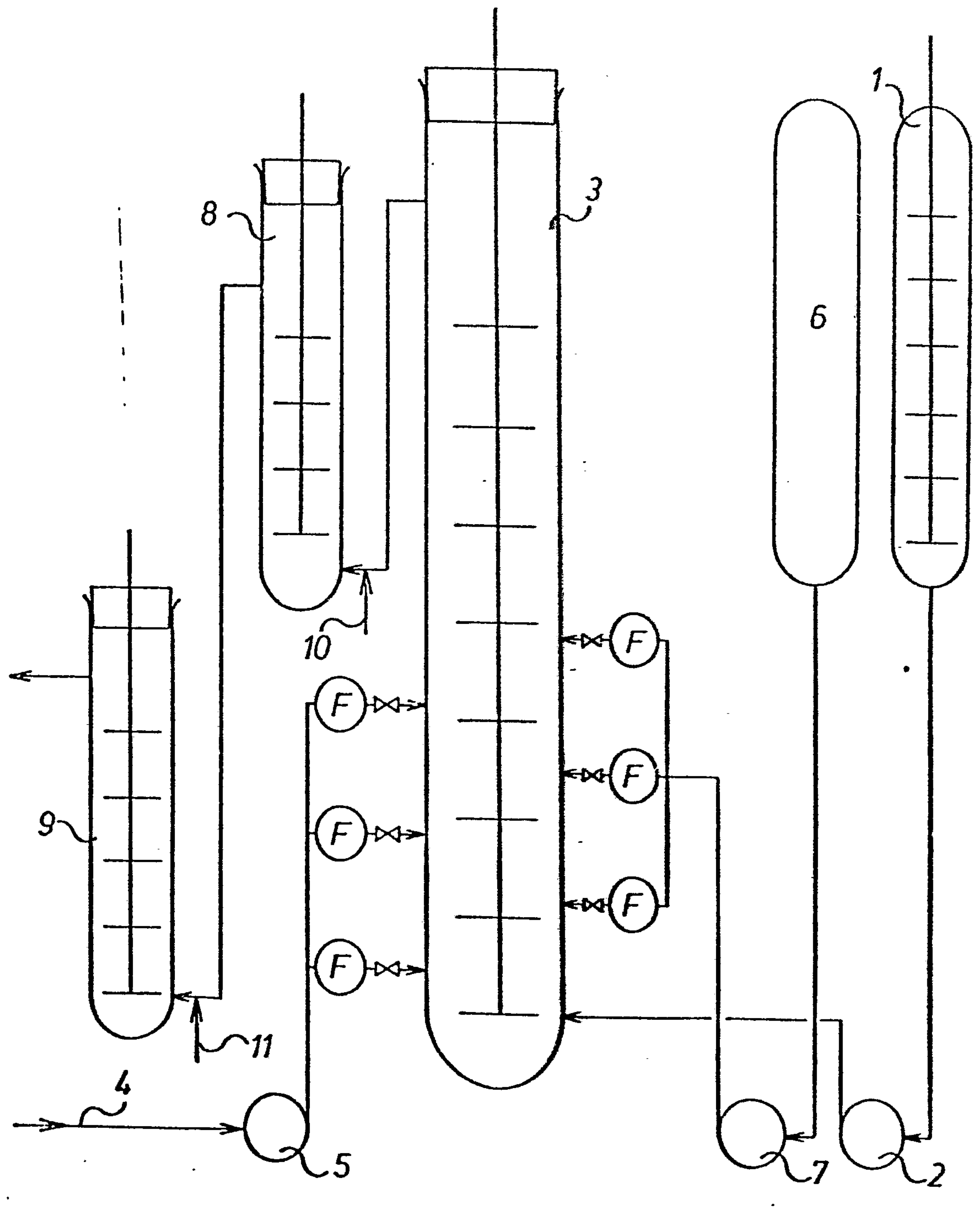
1
2
3
4
5
6
7
8
9
10
11
F
F
F
F
F
F
F